# EUROPÄISCHE PATENTSCHRIFT

(11) **EP 2 538 526 B1**
(45) Veröffentlichungstag und Bekanntmachung des Hinweises auf die Patenterteilung: **11.05.2022**
(21) Anmeldenummer: 12172977.6
(22) Anmeldetag: 21.06.2012
(51) Int. Cl.: H02K 7/116, F16B 9/02

(54) **Drehstrom-Getriebemotor und Komponenten desselben**
Alternating current drive engine and components of same
Moteur d'engrenage triphasé et composants de celui-ci

(30) Priorität: 21.06.2011 DE 102011077930
(43) Veröffentlichungstag der Anmeldung: 26.12.2012
(73) Patentinhaber: Lenze Drives GmbH, 32699 Extertal (DE)
(72) Erfinder: Hilkemeier, Andreas, 32694 Dörentrup (DE)
(74) Vertreter: Patentanwälte Ruff, Wilhelm, Beier, Dauster & Partner mbB

(56) Entgegenhaltungen:
- WO-A1-98/31965
- DE-A1- 3 502 015
- DE-B3-102005 057 358
- JP-A- 2001 119 894

## Beschreibung

Die Erfindung betrifft einen Drehstrom-Getriebemotor für industrielle Anwendungen wie beispielsweise für industriell verwendete Fertigungsmaschinen. Ein solcher gattungsgemäßer Drehstrom-Getriebemotor verfügt über einen als Drehstrommotor mit einer Leistung zwischen 60W und 100kW ausgebildeten Elektromotor und über ein hiermit verbundenes Getriebe. Dabei ist der Elektromotor mit einem abtriebswellenseitigen Lagerschild und einer durch eine Ausnehmung im Lagerschild hindurch geführten und um eine Hauptachse drehbaren Abtriebswelle ausgestattet. Das mit der Abtriebswelle des Elektromotors gekoppelte Getriebe ist mit einem Getriebegehäuse und einer Ausnehmung im Getriebegehäuse, durch die die Abtriebswelle in das Getriebegehäuse hineinragt, ausgestattet.

Zur Verbindung des Getriebegehäuses mit dem Lagerschild des Elektromotors ist eine getriebeseitige Verbindungseinrichtung entweder am Getriebegehäuse selbst oder an einem mit dem Getriebegehäuse verbundenen Zwischenflansch, der eine Ausnehmung aufweist, durch die die Abtriebswelle hindurchragt, vorgesehen.

Gattungsgemäße Getriebemotoren sind aus dem Stand der Technik allgemein bekannt. Solche Getriebemotoren bilden eine konstruktive Einheit, die der Tatsache geschuldet ist, das Elektromotoren zumeist zweckmäßigerweise bei hohen Drehzahlen betrieben werden, die eine Getriebeuntersetzung erforderlich machen. Trotz der Tatsache, dass beim Getriebemotor der Elektromotor und das Getriebe eine gemeinsame Einheit bilden, sind diese insbesondere zum Zwecke einer modularen Kombinierbarkeit verschiedener Elektromotoren und verschiedener Getriebe häufig separat ausgebildet und werden vom Hersteller abhängig von der gewünschten Konfiguration zu einer Einheit verbunden. Es bedarf hierfür einer Möglichkeit, das Lagerschild des Elektromotors mit dem Getriebegehäuse zu verbinden. Gattungsgemäße Getriebemotoren lösen dies durch eine getriebeseitige Verbindungseinrichtung, die fest mit dem Lagerschild verbindbar ist.

Dabei kann diese Verbindungseinrichtung entweder unmittelbar und unlösbar Teil des Getriebegehäuses sein. Sie kann jedoch auch an einem Zwischenflansch vorgesehen sein, der einerseits mit dem Lagerschild und andererseits mit dem Getriebegehäuse verbunden ist. Ein solcher Zwischenflansch gattungsgemäßer Getriebemotoren bildet meist einen lösbaren Teil einer Außenwand der Getriebegehäuses, der von den angrenzenden Wandungen der Außenwand des Getriebegehäuses lösbar ist, ohne die im Getrieberaum des Getriebegehäuses angeordneten Getriebekomponenten dadurch zu tangieren.

Bei aus dem Stand der Technik bekannten Getriebemotoren ist diese getriebeseitige Verbindungseinrichtung mit einer Mehrzahl von Bohrungen versehen, zu denen korrespondierende Bohrungen am Lagerschild vorgesehen sind. Durch diese jeweils zwei Bohrungen hindurch erfolgt mittels Schrauben die Verbindung der Verbindungseinrichtung mit dem Lagerschild.

Die Erfahrung mit den aus dem Stand der Technik bekannten Getriebemotoren hat gezeigt, dass sich die gewünschte kleine Baugröße und die ebenfalls gewünschte große Variabilität in der Kombinierbarkeit verschiedener Elektromotoren mit verschiedenen Getrieben bei Nutzung der bekannten Techniken nur schwer gemeinsam realisieren lassen. Die genannten Bohrungen müssen am Lagerschild für den Fall einer Verschraubung von Motorenseite aus so angeordnet sein, dass sie noch zugänglich sind. Sie werden daher üblicherweise noch außerhalb des Stators des Elektromotors angeordnet und erhöhen somit insbesondere bei der Verwendung kleiner Getriebe den erforderlichen Bauraum, ohne dass dies durch den Elektromotor und das Getriebe selbst erzwungen wird. Eine Verschraubung von der Seite der Verbindungseinrichtung ist nur bei Verwendung eines Zwischenflansches möglich. Allerdings ist hier zu beachten, dass die Bohrungen für den Fall, dass sie von der Hauptachse ähnlich weit beabstandet sind wie der Stator des Elektromotors, so angeordnet sein müssen, dass die Funktionsweise des Elektromotors nicht beeinträchtigt wird. Dies ist mitunter nur schwer realisierbar. Auch können diese Bohrungen, sofern sie als Durchgangsbohrungen gestaltet sind, ein Problem hinsichtlich der Abdichtung darstellen. Zudem existieren Gestaltungen, bei denen der Zwischenflansch von der Getriebeseite am Elektromotor und von der Motorenseite am Getriebe festzuschrauben ist, wobei dies durch eine Gestaltung des Zwischenflansches mit einem verjüngten Hals erzielt wird. Diese Gestaltungen erzwingen jedoch eine recht große axiale Baugröße.

Eine weitere Anforderung an gattungsgemäße Getriebemotoren der genannten Leistungsklasse im industriellen Umfeld ist es, eine variable Anbringung des Motors am Getriebe zu ermöglichen. Dies ist primär der Tatsache geschuldet, dass in Maschinen oder Einrichtungen, in denen der Getriebemotor genutzt wird, die Zugänglichkeit zu einem Klemmkasten des Motors gewährleistet sein muss. Eine fest vorgegebene RelativAusrichtung des Motors zum Getriebe würde im Einzelfall dazu führen, dass das Anschließen des Klemmkastens des Motors an die Stromversorgung deutlich erschwert würde.

Aus dem Bereich kleiner Gleichstrommotoren sind zur Aneinanderfügung von Motoren und Getrieben Gewindeverbindungen bekannt. Derartige Getriebemotoren sind beispielsweise in der JP 2001-119894 A und der DE 102005057358 B3 vorgeschlagen.

### Aufgabe und Lösung

Aufgabe der Erfindung ist es daher, eine Möglichkeit zur Verfügung zu stellen, um die Verbindungseinrichtung und das Lagerschild miteinander zu verbinden, wobei die Verbindung möglichst unabhängig von der Größe des Getriebes und des Elektromotors gleichbleibend ausgestaltet sein können sein sollte und eine geringe Baugröße des Getriebemotors gestatten sollte. Insbesondere soll eine ideale Verbindungsmöglichkeit es erlauben, dass der Getriebemotor quer zur Hauptachse keine Erstreckung aufweisen muss, die die maximale Erstreckung des Getriebes und des Elektromotors selbst übersteigt. Weiterhin soll die Verbindungsmöglichkeit die Variable Anordnung des Motors zum Getriebe gewährleisten. Die Aufgabe wird gelöst durch einen Drehstrom-Elektromotor nach Anspruch 1, einen Zwischenflansch nach Anspruch 2, ein Getriebe nach Anspruch 3 und ein Set zur Zusammenstellung eines Drehstrom-Getriebemotors nach Anspruch 4. Bevorzugte Ausführungsformen sind in den abhängigen Ansprüchen beschrieben.

Erfindungsgemäß wird diese Aufgabe dadurch gelöst, dass die getriebeseitige Verbindungseinrichtung und das Lagerschild miteinander durch eine Gewindeverbindung mit Innengewinde und Außengewinde verbunden sind, wobei diese beiden Gewinde die Ausnehmung im Lagerschild sowie die Ausnehmung im Getriebegehäuse bzw. im Zwischenflansch umgeben.

Weiterhin ist erfindungsgemäß vorgesehen, dass an der Verbindungseinrichtung und am Lagerschild korrespondierende Anschlagflächen vorgesehen sind, die ein Aufschrauben der Verbindungseinrichtung auf das Lagerschild axial begrenzen. Gleichzeitig ist das Innengewinde und/oder das Außengewinde mehrgängig ausgebildet.

Bei einem Lagerschild im Sinne der Erfindung handelt es sich um eine den Elektromotor in Richtung seiner Abtriebswelle abschließende Wandung, welche zur Anbringung der Verbindungseinrichtung geeignet ist. Das mit dem Elektromotor verbundene Getriebe kann ein beliebiges Übersetzungs- oder Untersetzungsgetriebe sein. Es weist ein Getriebegehäuse auf, welches vorzugsweise zumindest den überwiegenden Teil der einen Getrieberaum des Getriebegehäuses umgebenen Wandungen einstückig miteinander bildet. In diesem Getrieberaum können je nach Ausgestaltung des Getriebes verschiedene miteinander kämmende Getriebekomponenten wie Zahnräder oder Schnecken angeordnet sein. Bei einer Gestaltung mit Zwischenflansch ist das Getriebegehäuse zumeist zum Elektromotor weisend offen ausgebildet und dort mittels des Zwischenflansches verschließbar. Der Elektromotor selbst ist ein Industrie-Drehstrommotor mit einer Leistungsaufnahme von zwischen 60W und 100kW.

Die entweder am Getriebegehäuse oder am Zwischenflansch vorgesehene Verbindungseinrichtung umfasst all jene Flächen und Komponenten, die entweder unmittelbar mit dem Lagerschild des Elektromotors in Berührkontakt gelangen oder mittelbar der Trennbarkeit des Zwischenflansches oder des Getriebegehäuses von der Verbindungseinrichtung entgegenwirken.

Erfindungsgemäß ist vorgesehen, dass die Verbindung zwischen der Verbindungseinrichtung und dem Lagerschild durch ein Außengewinde und ein Innengewinde bewirkt werden, die die jeweiligen Ausnehmungen und somit auch die hier hindurch geführte Abtriebswelle des Elektromotors umgeben. Dabei umfasst die Abtriebswelle definitionsgemäß auch alle Teile außerhalb des Elektromotorengehäuses, die durch mechanische Kopplung stets koaxial und mit gleicher Geschwindigkeit wie der Rotor des Elektromotors drehen.

Die Verbindung zwischen dem Zwischenflansch bzw. dem Getriebegehäuse und dem Elektromotor wird bei einem erfindungsgemäßen Getriebemotor dadurch erzielt, dass der Elektromotor auf das Gewinde der Verbindungseinrichtung aufgeschraubt bzw. eingeschraubt wird, wobei die hierfür erforderliche Drehbewegung zumindest in etwa oder sogar exakt um die Hauptachse der Abtriebswelle erfolgt.

Als Innengewinde und Außengewinde im Sinne dieser Erfindung werden korrespondierende und zusammenwirkende Führungseinrichtungen verstanden, die eine Kopplung zweier Komponenten durch eine überlagerte translative und rotative Bewegungen zulassen. Vorteilhafterweise handelt es sich bei den Gewinden jeweils um Gewinde mit durchgängigen Gewindegängen. Umfasst sind jedoch auch Gestaltungen, bei denen die Gewindegänge an einem oder beiden Gewinden nicht durchgängig sind. So kann beispielsweise durch jeweils zueinander komplementär nur abschnittsweise vorgesehene Gewindegänge am Innengewinde und Außengewinde ermöglicht werden, dass die Gewinde zunächst nur axial ineinander geschoben werden, um sie lediglich für einen letzten axialen Teilabschnitt auch gegeneinander rotativ zu bewegen. Eine ähnliche Montageerleichterung kann dadurch erzielt werden, dass die beiden Gewinde in sich konisch geformt sind, so dass die Gewindegänge einen sich stetig verändernden Abstand zur Mittelachse der Gewinde aufweisen.

Die erfindungsgemäß vorgesehene Gewindeverbindung kann als einzige Gewindeverbindung zwischen dem Lagerschild und der Verbindungseinrichtung vorgesehen sein. Da es sich nur um eine Gewindeverbindung handelt, kann diese durch Drehen des Elektromotors und des Getriebegehäuses bzw. des Lagerflansches gegeneinander hergestellt werden, wobei aufgrund der zumindest ungefähren Übereinstimmung einer Mittelachse der Gewinde mit der Hauptachse der Abtriebswelle die Abtriebswelle dem Verdrehen nicht entgegensteht. Weiterhin können die Gewinde verglichen mit Gewinden von Befestigungsschrauben bekannter Getriebemotoren einen sehr großen Durchmesser aufweisen, so dass bereits diese einzige Gewindeverbindung eine Qualität der Verbindung schafft, die ansonsten mit einer Vielzahl von Schrauben erzielt werden müsste. So ist es auch möglich, auf jegliche zusätzlichen Verbindungen zwischen der Verbindungseinrichtung und dem Lagerschild zu verzichten. Selbstverständlich können jedoch zusätzliche Sicherungen gegen das Lösen der Verbindungseinrichtung vom Lagerschild vorgesehen sein, so beispielsweise eine zusätzliche Klebverbindung, Stifte oder Schrauben, die einer axialen oder rotativen Relativbewegung entgegenstehen, oder auch Sicherungsbleche oder -drähte.

Die erfindungsgemäß nur eine zwingend erforderliche Gewindeverbindung ist auch im Sinne der Variabilität von Vorteil. So kann ein Gewinde gleichen Durchmessers bei einem großen Elektromotor die Abtriebswelle nah umgebend vorgegeben sein, während ein Gewinde gleicher Baugröße bei einem kleinen Elektromotor ähnlich weit von der Hauptachse beabstandet sein könnte wie der Stator dieses kleineren Elektromotors. Es wird jedoch sowohl beim kleineren als auch beim größeren Elektromotor dieses Beispiels keine Baugröße quer zur Hauptrichtung durch die Befestigungsmethode erzwungen, die die Baugröße des Elektromotors selbst quer zu Hauptrichtung übersteigt.

Wie bereits erwähnt ist es vorgesehen, dass die Mittelachse der Gewinde mit der Hauptachse der Abtriebswelle zumindest in etwa übereinstimmen. Bei einer vollständigen Übereinstimmung wird der Vorteil erreicht, dass die Lage der Hauptachse im montierten Zustand relativ zum Getriebegehäuse nicht von der Drehstellung des Elektromotors gegenüber dem Getriebegehäuse abhängt. Es kann jedoch auch sinnvoll sein, die Mittelachse und die Hauptachse leicht parallel zueinander versetzt anzuordnen, so dass in Abhängigkeit der Drehstellung des Elektromotors zum Getriebegehäuse ein variables Spiel zwischen einem Ritzel oder einer Schnecke an der Abtriebswelle und einer mit dieser Getriebekomponente zusammenwirkenden weiteren Getriebekomponente erreicht wird.

Grundsätzlich ist es für das Grundprinzip der Erfindung nicht relevant, ob das Innengewinde an der getriebeseitigen Verbindungseinrichtung oder aber am Lagerschild vorgesehen ist. Dennoch wird es als vorteilhaft angesehen, wenn das Innengewinde an der getriebeseitigen Verbindungseinrichtung vorgesehen ist, wobei es dabei insbesondere von Vorteil ist, wenn das Innengewinde an einer die Ausnehmung des Getriebegehäuses bzw. des Zwischenflansches begrenzenden Innenfläche des Getriebegehäuses oder des Zwischenflansches vorgesehen ist. Diese Anordnung, bei der das Innengewinde den Zwischenflansch bzw. eine Wandung des Getriebegehäuses hin zu der darin vorgesehenen Ausnehmung begrenzt, gestattet eine axial verringerte Baulänge des Getriebemotors, da für das Innengewinde keine die Gesamtbaulänge des Getriebemotors axial verlängernde Gestaltung vorgesehen sein muss.

Die erfindungsgemäß vorgesehenen korrespondierenden Anschlagsflächen bewirken eine definierte Endstellung in axialer Hinsicht des Getriebegehäuses bzw. des Zwischenflansches gegenüber dem Lagerschild. Um dennoch eine die gewünschte Variabilität hinsichtlich der Drehposition des Elektromotors gegenüber dem Getriebe im montierten Zustand erzielen zu können, ist die Mehrgängigkeit der Gewindeverbindung oder zumindest eines Gewindes der Gewindeverbindung vorgesehen. Abhängig davon, welche Gewindegänge des Innengewindes und des Außengewindes in Eingriff miteinander gelangen, wird eine unterschiedliche Drehposition des Elektromotors gegenüber dem Zwischenflansch bzw. dem Getriebegehäuse nach Erreichen des beschriebenen Anschlagszustandes erzielt. Das mehrgängige Gewinde ist mindestens zweigängig ausgebildet. Von Vorteil ist jedoch eine viergängie Ausbildung, um in vier vorzugsweise in etwa um 90° voneinander beabstandeten Relativdrehstellungen die Anbringung des Zwischenflansches bzw. des Getriebegehäuses am Lagerschild erzielen zu können. Diese insgesamt vier Möglichkeiten bilden die meisten der verwenderseitig gewünschten Ausrichtungen. Die vier um 90° gegeneinander beabstandeten Stellungen werden auch erreicht, wenn das Innengewinde und/oder das Außengewinde eine Zahl von Gängen aufweist, die ein ganzzahliges Vielfaches von vier ist.

Die Mehrgängigkeit des Gewindes gestattet es, den Motor in variablen Stellungen an das Getriebe anzukoppeln. Dies ist insbesondere bei einem Motor mit einem an exzentrisch einer Seitenfläche des Motors angebrachten Klemmkasten von Vorteil. Dieser kann hierdurch variabel positioniert werden, so dass er in der Maschine, in der der erfindungsgemäße Getriebemotor Verwendung findet, gut zugänglich ist.

Um eine hohe Steifigkeit der Verbindung zu erzielen, wird es als Vorteilhaft angesehen, wenn die Gewindegänge sich über mindestens 360°, also eine vollständige Umdrehung, erstrecken. Demgegenüber noch vorteilhafter ist eine Erstreckung um mindestens 720°.

Die erfindungsgemäß vorgesehene Gewindeverbindung kann zusätzliche eine Zentrierungsfunktion übernehmen. Es sind jedoch auch Gestaltungen denkbar und fallweise vorteilhaft, bei denen eine separate Zentrierungseinrichtung vorgesehen ist, die an der Verbindungseinrichtung und am Lagerschild eine konische oder kreiszylindrische Außenfläche und eine konische oder kreiszylindrische Innenfläche aufweist, welche im montierten Zustand der Verbindungseinrichtung am Lagerschild voneinander um maximal 0,2 mm beabstandet sind. Vorzugsweise ist der Abstand der Flächen geringer, insbesondere vorzugsweise beträgt er maximal 0,1 mm.

Durch eine solche separate Zentrierungshilfe wird die erforderliche Präzision an den Gewinden gesenkt. Eine vereinfachte Herstellung ist bei einer separaten Zentrierungseinrichtung möglich, indem die Zentrierungseinrichtung zylindrische Flächen aufweist, deren Durchmesser mit dem Außendurchmesser des Außengewindes oder dem Innendurchmesser des Innengewindes übereinstimmt (+/- 0,3mm).

Vorzugsweise ist die Verbindungseinrichtung auch dafür ausgebildet, eine Dichtfunktion zu übernehmen, so dass das Lagerschild des Elektromotors zumindest abschnittsweise einen Öl beinhaltenden Raum des Getriebes mit begrenzen kann. Hierfür ist vorgesehen, dass eine umlaufende Dichtung zwischen dem Lagerschild des Elektromotors und dem Gehäuse des Getriebemotors oder dem getriebeseitigen Zwischenflansch angeordnet wird. Durch Zusammenschrauben des Motors und des Getriebes wird diese umlaufende Dichtung, beispielsweise ein Dichtring oder ein O-Ring, in seiner die Dichtfunktion übernehmende Stellung gedrückt.

Die Erfindung betrifft weiterhin einen Drehstrom-Elektromotor der bereits genannten Leistungsklasse für einen Getriebemotor der beschriebenen Art, wobei der Elektromotor eine Abtriebswelle und auf der Seite der Abtriebswelle ein Lagerschild aufweist. Dabei ist erfindungsgemäß vorgesehen, dass zur Verbindung des Lagerschildes mit einem Zwischenflansch oder einem Getriebegehäuse ein Innengewinde oder ein Außengewinde am Lagerschild vorgesehen ist, welches die Abtriebswelle umgibt. Weiterhin ist auch hier vorgesehen, dass das Innengewinde oder das Außengewinde des Elektromotors mehrgängig ausgebildet ist und dass an der Verbindungseinrichtung eine Anschlagsfläche vorgesehen ist, die ein Aufschrauben eines motorenseitigen Lagerschildes auf die getriebeseitige Verbindungseinrichtung begrenzt.

Ebenso umfasst die Erfindung auch einen Zwischenflansch für einen beschriebenen Getriebemotor, wobei dieser Zwischenflansch eine Ausnehmung aufweist, die zum Hindurchragen der Abtriebswelle vorgesehen ist. Dabei weist der Zwischenflansch zur Verbindung mit einem Elektromotor eine Verbindungseinrichtung auf, welche ein Innengewinde oder ein Außengewinde aufweist, welches die Ausnehmung umgibt. Zur Verbindung mit einem Getriebegehäuse, welches durch den Zwischenflansch vorzugsweise verschließbar ist, sind vorzugsweise Bohrungen im Zwischenflansch zur Verschraubung am Getriebegehäuse vorgesehen. Das Innengewinde oder Außengewinde des erfindungsgemäßen Zwischenflansches ist mehrgängig ausgebildet und an der Verbindungseinrichtung ist eine Anschlagsfläche vorgesehen, die ein Aufschrauben eines motorenseitigen Lagerschildes auf die getriebeseitige Verbindungseinrichtung begrenzt.

Korrespondierend hierfür betrifft die Erfindung auch ein Getriebe für einen Getriebemotor der vorbeschriebenen Art, wobei das Getriebe ein Getriebegehäuse mit einer Ausnehmung zum Hindurchragen der Abtriebswelle des Elektromotors aufweist. Dabei ist erfindungsgemäß vorgesehen, dass das Getriebegehäuse zur Verbindung mit einem Elektromotor eine Verbindungseinrichtung aufweist, welche ein Innengewinde oder ein Außengewinde aufweist, welches die Ausnehmung umgibt. Auch hier ist vorgesehen, dass das Innengewinde oder Außengewinde mehrgängig ausgebildet ist und dass an der Verbindungseinrichtung eine Anschlagsfläche vorgesehen ist, die ein Aufschrauben eines motorenseitigen Lagerschildes auf die getriebeseitige Verbindungseinrichtung begrenzt.

Im Hinblick auf die Gestaltung der erfindungsgemäß vorgesehenen Gewinde sind alle Gewindeprofilformen, wie beispielsweise Fein-, Norm-, Trapez-, Rund-, Rohr- und Sägengewinde verwendbar und in Abhängigkeit des jeweiligen Anforderungsprofils zweckmäßigerweise zu verwenden. Von Vorteil ist es, wenn die beschriebenen Komponenten zur Verbindung des Lagerschildes und der Verbindungseinrichtung metallisch ausgebildet sind, wobei im Einzelfall auch die Verwendung nicht metallischer Werkstoffe wie beispielsweise von Kunststoff-Werkstoffen zweckmäßig sein kann.

Die Erfindung betrifft weiterhin auch ein Set zur Zusammenstellung eines Drehstrom-Getriebemotors, der einen Drehstrom-Elektromotor und ein hiermit verbundenes Getriebe aufweist. Dabei weist dieses Set mindestens zwei Drehstrom-Elektromotoren auf, die wahlweise mit dem Getriebe verbunden werden können.

Hierfür sind die Elektromotoren trotz ihrer unterschiedlichen Leistungsklasse (Unterschied in der Leistung mindestens 10%) oder ihrer unterschiedlichen Baugrößen (Unterschied im von einem Gehäuse des Elektromotoren umschlossenes Volumen mindestens 10%) mit übereinstimmenden vorzugsweise mehrgängigen Innengewinde oder Außengewinde ausgebildet.

Das Set repräsentiert somit ein mit erfindungsgemäßen GetriebeMotoren vorteilhaft realisierbares Baukastensystem, bei dem eine einheitliche Gewindegestaltung genutzt wird, um verschiedene Motoren mit dem gleichen Getriebe koppeln zu können.

### Kurzbeschreibung der Zeichnungen

Weitere Vorteile und Aspekte der Erfindung ergeben sich außer aus den Ansprüchen auch aus der nachfolgenden Beschreibung von bevorzugten Ausführungsbeispielen der Erfindung, die in den Figuren dargestellt sind. Dabei zeigen:
- Fig. 1: einen erfindungsgemäßen Getriebemotor im nicht montierten Zustand,
- Fig. 2: den Getriebemotor aus Fig. 1 mit am Elektromotor des Getriebemotors angebrachtem Zwischenflansch,
- Fig. 3a und 3b: den montierten Zustand in einer Schnittdarstellung und
- Fig. 4: ein weiteres Ausführungsbeispiel eines erfindungsgemäßen Getriebemotors.

### Detaillierte Beschreibung der Ausführungsbeispiele

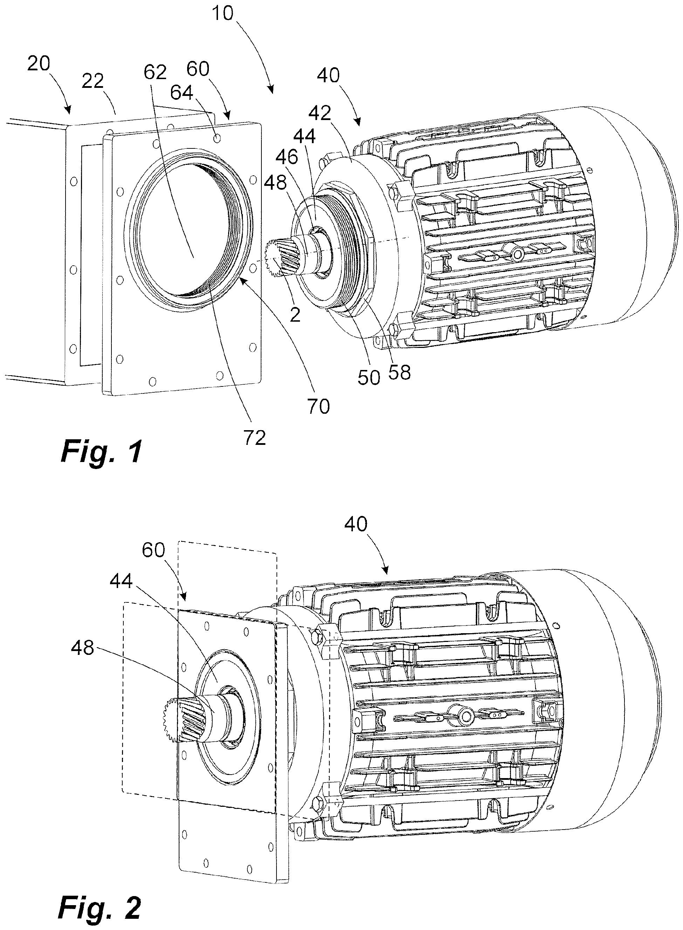

Fig. 1 zeigt einen erfindungsgemäßen Getriebemotor 10. Dieser weist als Hauptkomponenten ein lediglich durch ein Getriebegehäuse 22 verdeutlichtes Getriebe 20, einen Elektromotor 40 sowie einen Zwischenflansch 60 auf. Der Zwischenflansch 60 ist zur Anbringung an einer Stirnseite des Getriebegehäuses 22 vorgesehen und verschließt hierdurch eine dort vorgesehene Zugangsöffnung. Er verfügt über Bohrungen 64, durch die hindurch nicht dargestellte Befestigungsschrauben von der Motorenseite aus in eine korrespondierende Bohrung des Getriebegehäuses 22 eingeschraubt werden.

Zur Verbindung mit einem Lagerschild 42 des Elektromotors 40 weist der Zwischenflansch 60 eine eine Ausnehmung 62 umgebende Verbindungseinrichtung 70 auf. Zur Verbindung des Zwischenflansches 60 mit dem Lagerschild 42 des Elektromotors 40 ist an einer zur Ausnehmung 62 hinweisenden Innenseite des Zwischenflansches 60 ein Innengewinde 72 vorgesehen. Korrespondierend hierzu ist an einem ringförmigen Fortsatz 44 des Lagerschildes 42, der eine Ausnehmung 46 und die darin angeordnete und um eine Hauptachse 2 drehbare Abtriebswelle 48 des Elektromotors 40 umgibt, ein Außengewinde 50 vorgesehen.

Diese beiden Gewinde 50, 72 gestatten es, den Elektromotor 40 in seiner Gesamtheit in den Zwischenflansch 62 einzuschrauben. Zur Erleichterung dessen ist ein Mehrkant 58, vorliegend ein Achtkant 58, am Lagerschild 42 vorgesehen, der eine bezogen auf eine Drehung um die Hauptachse 2 formschlüssige Handhabung des Elektromotors 40 gestattet.

In Fig. 2 ist der eingeschraubte Zustand zu erkennen. Der Fortsatz 44 ist so bemessen, dass er in der Ausnehmung 62 des Zwischenflansches 60 vollständig aufgenommen ist. Die durch die Ausnehmung 62 hindurch ragende Abtriebswelle 48 ragt nach Anbringung des Zwischenflansches 60 am Getriebe 20 in dessen Getriebeinnenraum hinein, so dass ein an der Abtriebswelle 48 vorgesehenes Zahnrad in Eingriff mit anderen Getriebekomponenten gelangen kann.

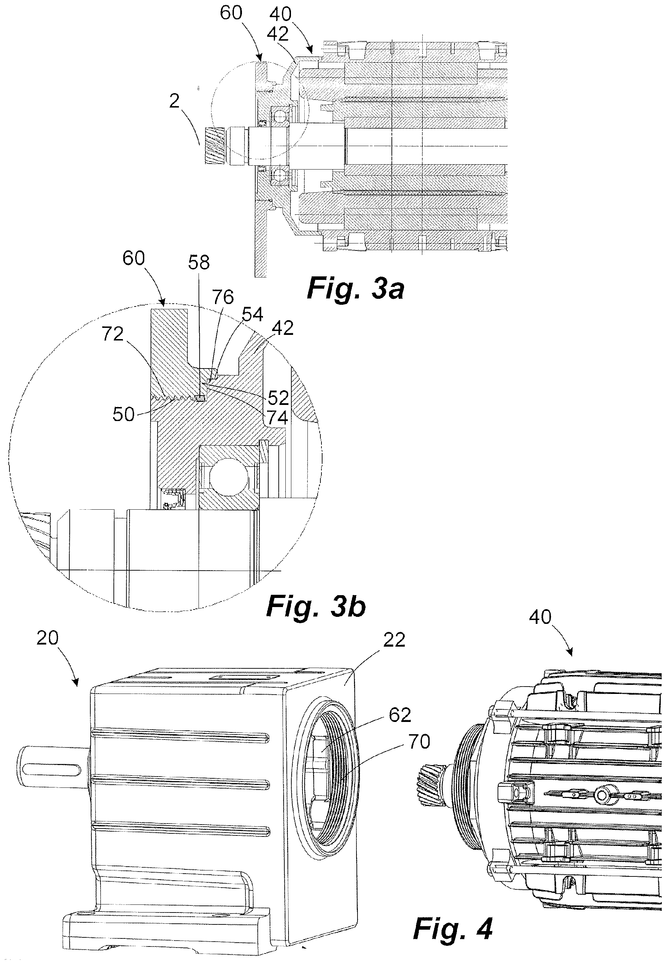

Die Figuren 3a und 3b verdeutlichen den montierten Zustand des Zwischenflansches 60 am Lagerschild 42 in geschnittenen Darstellungen. Wie insbesondere anhand der Figur 3b zu erkennen ist, sind am Lagerschild 42 sowie am Zwischenflansch 60 axiale Anschlagsflächen 74, 52 vorgesehen. Das Einschrauben des Elektromotors 40 in die Ausnehmung 62 erfolgt, bis diese Anschlagsflächen 52, 74 aneinander anliegen. Weiterhin ist insbesondere in Figur 3b zu erkennen, dass die Gewindeverbindung aus dem Außengewinde 50 und dem Innengewinde 72 keine Zentrierungsfunktion übernimmt. Stattdessen sind zylindrische oder leicht konische Zentrierungsflächen 76, 54 an Zwischenflansch 60 einerseits und am Lagerschild 40 andererseits vorgesehen, die präziser als das Gewinde gearbeitet sind und somit eine genauere Zentrierung zulassen. Zur Abdichtung ist auf Seiten des Lagerschildes 42 ein O-Ring 58 vorgesehen, der durch das Aufschrauben des Zwischenflansches 60 zusammengedrückt wird und damit seine Dichtfunktion übernehmen kann.

Um nicht auf nur eine denkbare Relativposition des Zwischenflansches 60 relativ zum Elektromotor 40 im montierten Zustand beschränkt zu sein, ist bei der vorliegenden Ausgestaltung vorgesehen, dass sowohl das Außengewinde 50 als auch das Innengewinde 72 mehrgängig, im vorliegendem Fall viergängig, ausgebildet sind. Hierdurch wird in Abhängigkeit der gewählten Drehstellung des Zwischenflansches 60 und des Elektromotors 40 zu Beginn des Einschraubvorgangs eine variable Relativstellung im montierten Zustand möglich. So ist es durch die Viergängigkeit der Gewinde 50, 72 möglich, nicht nur die in Fig. 2 mit durchgezogenen Linien dargestellter Relativposition, sondern auch eine der drei gestrichelten dargestellten Relativpositionen des Elektromotors 40 gegenüber dem Zwischenflansch 60 zu erreichen. Diese verschiedenen Relativpositionen sind gegeneinander um jeweils 90° beabstandet. Hierdurch sind die üblichen von Verwendern solcher Getriebemotoren gewünschten Ausrichtungsvarianten abgedeckt.

Während bei dem Ausführungsbeispiel der Figuren 1 bis 3 die Verbindungseinrichtung 70 Teil des Zwischenflansches 60 ist und mit dem Getriebegehäuse 22 separat zu verbinden ist, kann bei einer in Figur 4 dargestellte Variante hierzu auch auf den Zwischenflansch 60 verzichtet werden. Die Ausnehmung 62 sowie insbesondere die Verbindungseinrichtung 70 sind für diesen Fall unmittelbar an einer Stirnwand des Getriebegehäuses 22 vorgesehen.

## Patentansprüche

1. Drehstrom-Elektromotor (40) mit einer Leistung zwischen 60W und 100kW für einen Getriebemotor (10) mit einem Getriebe (20), wobei der Elektromotor (40) eine Abtriebswelle (48) und auf der Seite der Abtriebswelle (48) ein Lagerschild (42) aufweist, wobei Abtriebswelle (48) durch eine Ausnehmung (46) im Lagerschild (42) hindurchgeführt und um eine Hauptachse (2) drehbar ist,
**dadurch gekennzeichnet, dass**
zur Verbindung des Lagerschildes (42) mit einem Zwischenflansch (60) oder einem Getriebegehäuse (22) ein Innengewinde oder ein Außengewinde (50) am Lagerschild (42) vorgesehen ist, welches die Abtriebswelle (48) umgibt, wobei das Innengewinde oder Außengewinde (50) mehrgängig ausgebildet ist und wobei am Lagerschild (42) eine Anschlagsfläche (52) vorgesehen ist, die ein Aufschrauben einer getriebeseitigen Verbindungseinrichtung (70) auf das Lagerschild (42) begrenzt,
wobei
- die Anschlagsfläche (52) zusammen mit einer korrespondierenden Anschlagsfläche (74) an der Verbindungseinrichtung (70) in axialer Hinsicht eine definierte Endstellung des Zwischenflansches (60) bzw. des Getriebegehäuses (22) gegenüber dem Lagerschild (42) bewirkt und
- aufgrund der Mehrgängigkeit des Innengewindes oder des Außengewindes (50) unterschiedliche Drehpositionen des Elektromotors (40) gegenüber dem Zwischenflansch (60) bzw. dem Getriebegehäuse (22) nach Erreichen der definierten Endstellung erzielbar sind.

2. Zwischenflansch (60) für einen Getriebemotor mit einem Getriebe (20) und einem Drehstrom-Elektromotor (40) nach Anspruch 1 mit der Abtriebswelle (48), dem Lagerschild (42) und dem an dem Lagerschild (42) vorgesehen Innengewinde oder Außengewinde (50), wobei der Zwischenflansch (60) eine Ausnehmung (62) aufweist, die zum Hindurchragen der Abtriebswelle (48) des Drehstrom-Elektromotors (40) vorgesehen ist, und wobei der Zwischenflansch (60) zur Verbindung mit dem Elektromotor (40) eine Verbindungseinrichtung (70) aufweist, welche ein Außengewinde oder ein Innengewinde (72) für eine Gewindeverbindung mit dem Innengewinde bzw. dem Außengewinde (50) des Drehstrom-Elektromotors (40) aufweist, welches die Ausnehmung (62) umgibt,
**dadurch gekennzeichnet, dass**
das Außengewinde oder Innengewinde (72) mehrgängig ausgebildet ist und
an der Verbindungseinrichtung (70) eine Anschlagsfläche (74) vorgesehen ist, die ein Aufschrauben des motorenseitigen Lagerschildes (42) auf die getriebeseitige Verbindungseinrichtung (70) begrenzt.

3. Getriebe (20) für einen Getriebemotor mit einem Drehstrom-Elektromotor (40) nach Anspruch 1 mit der Abtriebswelle (48), dem Lagerschild (42) und dem an dem Lagerschild (42) vorgesehen Innengewinde oder Außengewinde (50), wobei das Getriebe (20) ein Getriebegehäuse (22) mit einer Ausnehmung zum Hindurchragen der Abtriebswelle des Drehstrom-Elektromotors (40) aufweist, und wobei das Getriebegehäuse zur Verbindung mit dem Elektromotor (40) eine Verbindungseinrichtung aufweist, welche ein Außengewinde oder ein Innengewinde für eine Gewindeverbindung mit dem Innengewinde bzw. dem Außengewinde (50) des Drehstrom-Elektromotors (40) aufweist, welches die Ausnehmung umgibt,
**dadurch gekennzeichnet, dass**
das Außengewinde oder Innengewinde mehrgängig ausgebildet ist und an der Verbindungseinrichtung eine Anschlagsfläche vorgesehen ist, die ein Aufschrauben eines motorenseitigen Lagerschildes auf die getriebeseitige Verbindungseinrichtung begrenzt.

4. Set zur Zusammenstellung eines Drehstrom-Getriebemotors (10), der einen Drehstrom-Elektromotor (40) und ein hiermit verbundenes Getriebe (20) aufweist, umfassend
- mindestens zwei Drehstrom-Elektromotoren (40) gemäß Anspruch 1 und
- ein wahlfrei mit der Abtriebswelle (48) eines der Drehstrom-Elektromotoren (40) koppelbares Getriebe (20) gemäß Anspruch 3 oder ein wahlfrei mit der Abtriebswelle (48) eines der Drehstrom-Elektromotoren (40) koppelbares Getriebe und einen Zwischenflansch (60) gemäß Anspruch 2,
wobei
- - die mindestens zwei Drehstrom-Elektromotoren (40) eine unterschiedliche Leistung aufweisen und/oder eine unterschiedliche Bauform aufweisen und
- - die mindestens zwei Drehstrom-Elektromotoren (40) übereinstimmende Innen- oder Außengewinde zur wahlfreien Kopplung mit dem Getriebe (20) bzw. dem Zwischenflansch (60) aufweisen

5. Drehstrom-Getriebemotor (10) mit einem Drehstrom-Elektromotor (40) nach Anspruch 1 mit der Abtriebswelle (48) und einem mit der Abtriebswelle (48) des Drehstrom-Elektromotors (40) gekoppelten Getriebe (20) mit einem Getriebegehäuse (22) nach Anspruch 3.

6. Drehstrom-Getriebemotor (10) mit einem Drehstrom-Elektromotor (40) nach Anspruch 1 mit der Abtriebswelle (48) und einem mit der Abtriebswelle (48) des Drehstrom-Elektromotors (40) gekoppelten Getriebe (20) mit einem Getriebegehäuse (22) und einem mit dem Getriebegehäuse (22) verbundenen Zwischenflansch (60) nach Anspruch 2.

7. Drehstrom-Getriebemotor nach Anspruch 5 oder 6,
**dadurch gekennzeichnet, dass**
eine Mittelachse (2) der Gewinde (50, 72) mit der Hauptachse (2) der Abtriebswelle (48) übereinstimmt.

8. Drehstrom-Getriebemotor nach Anspruch 5, 6 oder 7,
**dadurch gekennzeichnet, dass**
das Innengewinde (72) der Gewindeverbindung (50, 72) an der getriebeseitigen Verbindungseinrichtung (70) vorgesehen ist und das Innengewinde (72) an einer die Ausnehmung (62) des Getriebegehäuses (22) bzw. des Zwischenflansch (60) begrenzenden Innenfläche des Getriebegehäuses (22) oder des Zwischenflansches vorgesehen ist.

9. Drehstrom-Getriebemotor nach einem der Ansprüche 5 bis 8,
**dadurch gekennzeichnet, dass**
- das Innengewinde (72) und das Außengewinde (50) jeweils viergängig ausgebildet sind oder
- das Innengewinde (72) und das Außengewinde (50) jeweils eine Zahl von Gängen aufweist, die ein ganzzahliges Vielfaches von vier ist.

10. Drehstrom-Getriebemotor nach einem Ansprüchen 5 bis 9,
**dadurch gekennzeichnet, dass**
eine Zentrierungseinrichtung (54, 76) vorgesehen ist, die an der Verbindungseinrichtung (70) und am Lagerschild (42) eine konische oder kreiszylindrische Außenfläche (76) und eine konische oder kreiszylindrische Innenfläche (54) aufweist, welche im montierten Zustand der Verbindungseinrichtung (70) am Lagerschild (42) voneinander um maximal 0,2 mm beabstandet sind.

## Claims

1. AC electric motor (40) with a power of between 60 W and 100 kW for a geared motor (10) having a gear mechanism (20), wherein the electric motor (40) has an output shaft (48) and, on the side of the output shaft (48), a bearing plate (42), wherein the output shaft (48) is guided through a cutout (46) in the bearing plate (42) and can be rotated about a main axis (2),
**characterized in that**
an internal thread or an external thread (50), which surrounds the output shaft (48), is provided on the bearing plate (42) for connecting the bearing plate (42) to an intermediate flange (60) or a gear mechanism housing (22), wherein the internal thread or external thread (50) is of multi-start design and wherein a stop face (52) is provided on the bearing plate (42), said stop face limiting screwing of a gear mechanism-side connecting device (70) onto the bearing plate (42),
wherein
- the stop face (52), together with a corresponding stop face (74) on the connecting device (70), creates a defined end position of the intermediate flange (60) or the gear mechanism housing (22) with respect to the bearing plate (42) in axial terms, and
- different rotation positions of the electric motor (40) with respect to the intermediate flange (60) or the gear mechanism housing (22) can be achieved after the defined end position is reached on account of the multi-start capability of the internal thread or the external thread (50).

2. Intermediate flange (60) for a geared motor having a gear mechanism (20) and an AC electric motor (40) according to Claim 1 having the output shaft (48), the bearing plate (42) and the internal thread or external thread (50) provided on the bearing plate (42), wherein the intermediate flange (60) has a recess (62) through which the output shaft (48) of the AC electric motor (40) is intended to project, and wherein the intermediate flange (60) has, for connection to the electric motor (40), a connecting device (70) which has an external thread or an internal thread (72), which surrounds the recess (62), for threaded connection to the internal thread or the external thread (50) of the AC electric motor (40),
**characterized in that**
the external thread or internal thread (72) is of multi-start design and
a stop face (74) is provided on the connecting device (70), said stop face limiting screwing of the motor-side bearing plate (42) onto the gear mechanism-side connecting device (70).

3. Gear mechanism (20) for a geared motor having an AC electric motor (40) according to Claim 1 having the output shaft (48), the bearing plate (42) and the internal thread or external thread (50) provided on the bearing plate (42), wherein the gear mechanism (20) has a gear mechanism housing (22) with a recess for the output shaft of the AC electric motor (40) to project through, and wherein the gear mechanism housing has, for connection to the electric motor (40), a connecting device which has an external thread or an internal thread, which surrounds the recess, for threaded connection to the internal thread or the external thread (50) of the AC electric motor (40),
**characterized in that**
the external thread or internal thread is of multi-start design and a stop face is provided on the connecting device, said stop face limiting screwing of a motor-side bearing plate onto the gear mechanism-side connecting device.

4. Set for assembling an AC geared motor (10) which has an AC electric motor (40) and a gear mechanism (20) connected to said AC electric motor, comprising
- at least two AC electric motors (40) according to Claim 1 and
- a gear mechanism (20) according to Claim 3 which can be coupled selectively to the output shaft (48) of one of the AC electric motors (40) or a gear mechanism which can be coupled selectively to the output shaft (48) of one of the AC electric motors (40) and an intermediate flange (60) according to Claim 2,
wherein
- the at least two AC electric motors (40) have a different power and/or have a different design and
- the at least two AC electric motors (40) have corresponding internal or external threads for selective coupling to the gear mechanism (20) or to the intermediate flange (60).

5. AC geared motor (10) having an AC electric motor (40) according to Claim 1 having the output shaft (48) and a gear mechanism (20) which is coupled to the output shaft (48) of the AC electric motor (40) and has a gear mechanism housing (22) according to Claim 3.

6. AC geared motor (10) having an AC electric motor (40) according to Claim 1 having the output shaft (48) and a gear mechanism (20) which is coupled to the output shaft (48) of the AC electric motor (40) and has a gear mechanism housing (22) and an intermediate flange (60) according to Claim 2 which is connected to the gear mechanism housing (22).

7. AC geared motor according to Claim 5 or 6, **characterized in that**
a centre axis (2) of the thread (50, 72) corresponds to the main axis (2) of the output shaft (48).

8. AC geared motor according to Claim 5, 6 or 7, **characterized in that**
the internal thread (72) of the threaded connection (50, 72) is provided on the gear mechanism-side connecting device (70) and the internal thread (72) is provided on an inner face of the gear mechanism housing (22) or intermediate flange, which inner face delimits the recess (62) in the gear mechanism housing (22) or the intermediate flange (60).

9. AC geared motor according to one of Claims 5 to 8, **characterized in that**
- the internal thread (72) and the external thread (50) are each of four-start design or
- the internal thread (72) and the external thread (50) each have a number of starts that is an integer multiple of four.

10. AC geared motor according to one of Claims 5 to 9, **characterized in that**
a centring device (54, 76) is provided, which centring device has a conical or circular-cylindrical outer face (76) and a conical or circular-cylindrical inner face (54) on the connecting device (70) and on the bearing plate (42), which outer face and inner face are spaced apart from one another by at most 0.2 mm in the state in which the connecting device (70) is mounted on the bearing plate (42).

## Revendications

1. Moteur électrique triphasé (40) d'une puissance comprise entre 60 W et 100 kW pour un motoréducteur (10) avec une transmission (20), le moteur électrique (40) présentant un arbre de sortie (48) et une flasque (42) du côté de l'arbre de sortie (48), l'arbre de sortie (48) étant guidé à travers un évidement (46) dans la flasque (42) et pouvant tourner autour d'un axe principal (2), **caractérisé en ce que** pour le raccordement de la flasque (42) avec une bride intermédiaire (60) ou un carter de transmission (22), un taraudage ou un filetage (50) est prévu sur la flasque (42) et entoure l'arbre de sortie (48), dans lequel le taraudage ou le filetage (50) est réalisé à filets multiples, et sur la flasque (42) une surface de butée (52) est prévue qui limite un vissage sur la flasque (42) d'un dispositif de raccordement (70) côté transmission,
dans lequel
- la surface de butée (52) crée conjointement avec une surface de butée correspondante (74) sur le dispositif de raccordement (70) dans le sens axial une position d'extrémité définie de la bride intermédiaire (60) ou du carter de transmission (22), respectivement, par rapport à la flasque (42), et
- en raison des filets multiples du taraudage ou du filetage (50), différentes positions de rotation du moteur électrique (40) par rapport à la bride intermédiaire (60) ou au carter de transmission (22), respectivement, peuvent être obtenues après que la position d'extrémité définie est atteinte.

2. Bride intermédiaire (60) pour un motoréducteur avec une transmission (20) et un moteur électrique triphasé (40) selon la revendication 1, comprenant l'arbre de sortie (48), la flasque (42) et le taraudage ou le filetage (50) prévu sur la flasque (42), la bride intermédiaire (60) présentant un évidement (62) qui est prévu pour que l'arbre de sortie (48) du moteur électrique triphasé (40) fasse saillie à travers celui-ci, et la bride intermédiaire (60) présentant pour le raccordement au moteur électrique (40) un dispositif de raccordement (70) qui présente un filetage ou un taraudage (72) pour un raccordement fileté avec le taraudage ou le filetage (50), respectivement, du moteur électrique triphasé (40) et qui entoure l'évidement (62), **caractérisée en ce que** le filetage ou le taraudage (72) est réalisé à filets multiples, et sur le dispositif de raccordement (70), une surface de butée (74) est prévue qui limite un vissage de la flasque (42) côté moteur sur le dispositif de raccordement (70) côté transmission.

3. Transmission (20) pour un motoréducteur avec un moteur électrique triphasé (40) selon la revendication 1, comprenant l'arbre de sortie (48), la flasque (42) et le taraudage ou le filetage (50) prévu sur la flasque (42), la transmission (20) présentant un carter de transmission (22) doté d'un évidement pour que l'arbre de sortie du moteur électrique triphasé (40) fasse saillie à travers celui-ci, et le carter de transmission présentant pour le raccordement au moteur électrique (40) un dispositif de raccordement qui présente un filetage ou un taraudage pour un raccordement fileté avec le taraudage ou le filetage (50), respectivement, du moteur électrique triphasé (40) et qui entoure l'évidement, **caractérisée en ce que** le filetage ou le taraudage est réalisé à filets multiples, et sur le dispositif de raccordement, une surface de butée est prévue qui limite un vissage d'une flasque côté moteur sur le dispositif de raccordement côté transmission.

4. Ensemble permettant d'assembler un motoréducteur triphasé (10) qui présente un moteur électrique triphasé (40) et une transmission (20) raccordée à celui-ci, comprenant
- au moins deux moteurs électriques triphasés (40) selon la revendication 1, et
- une transmission (20) selon la revendication 3 pouvant être couplée au choix avec l'arbre de sortie (48) d'un des moteurs électriques triphasés (40), ou une transmission pouvant être couplée au choix avec l'arbre de sortie (48) d'un des moteurs électriques triphasés (40) et une bride intermédiaire (60) selon la revendication 2,
dans lequel
- les au moins deux moteurs électriques triphasés (40) présentent une puissance différente et/ou présentent une forme de construction différente, et
- les au moins deux moteurs électriques triphasés (40) présentent des taraudages ou filetages concordants pour le couplage au choix avec la transmission (20) ou la bride intermédiaire (60), respectivement.

5. Motoréducteur triphasé (10) avec un moteur électrique triphasé (40) selon la revendication 1, comprenant l'arbre de sortie (48) et une transmission (20) avec un carter de transmission (22) selon la revendication 3, couplée à l'arbre de sortie (48) du moteur électrique triphasé (40).

6. Motoréducteur triphasé (10) avec un moteur électrique triphasé (40) selon la revendication 1, comprenant l'arbre de sortie (48) et une transmission (20) avec un carter de transmission (22), couplée à l'arbre de sortie (48) du moteur électrique triphasé (40), et une bride intermédiaire (60) selon la revendication 2 raccordée au carter de transmission (22).

7. Motoréducteur triphasé selon la revendication 5 ou 6, **caractérisé en ce qu'**un axe central (2) des filets (50, 72) coïncide avec l'axe principal (2) de l'arbre de sortie (48).

8. Motoréducteur triphasé selon la revendication 5, 6 ou 7, **caractérisé en ce que** le taraudage (72) du raccordement fileté (50, 72) est prévu sur le dispositif de raccordement côté transmission (70), et le taraudage (72) est prévu sur une surface intérieure du carter de transmission (22) ou de la bride intermédiaire limitant l'évidement (62) du carter de transmission (22) ou de la bride intermédiaire (60), respectivement.

9. Motoréducteur triphasé selon l'une quelconque des revendications 5 à 8, **caractérisé en ce que**
- le taraudage (72) et le filetage (50) sont respectivement réalisés à quatre filets, ou
- le taraudage (72) et le filetage (50) présentent respectivement un nombre de filets qui est un multiple entier de quatre.

10. Motoréducteur triphasé selon l'une quelconque des revendications 5 à 9, **caractérisé en ce qu'**un dispositif de centrage (54, 76) est prévu qui présente au niveau du dispositif de raccordement (70) et de la flasque (42) une surface extérieure (76) conique ou cylindrique circulaire et une surface intérieure (54) conique ou cylindrique circulaire qui sont espacées l'une de l'autre au maximum de 0,2 mm à l'état monté du dispositif de raccordement (70) sur la flasque (42).
